# EUROPEAN PATENT SPECIFICATION

(11) **EP 2 600 674 B1**
(45) Date of publication and mention of the grant of the patent: **30.03.2016**
(21) Application number: 12195131.3
(22) Date of filing: 30.11.2012
(51) Int. Cl.: H04W 52/02, H04W 24/02, H04W 52/36, H04W 72/04, H04W 72/08

(54) **A method and device for radio resource management**
Verfahren und System zur Radioressourcenverwaltung
Procédé et dispositif pour la gestion de ressource radio

(30) Priority: 02.12.2011 CN 201110396364
(43) Date of publication of application: 05.06.2013
(73) Proprietor: Hangzhou H3C Technologies Co., Ltd., Hangzhou, Zhejiang 310053 (CN)
(72) Inventor: Kai, Cui, 100085 Beijing (CN)
(74) Representative: Zimmermann, Tankred Klaus

(56) References cited:
- EP-A1- 2 326 116
- WO-A1-2010/111006
- WO-A1-2010/121825
- US-A1- 2006 227 751

## Description

### BACKGROUND

J WLAN Radio Resource Management (WRRM) is a scheme for managing radio resource in a communication network. Within the scheme, one or more access points (AP) obtain in real time information about the radio environment, while an access controller (AC) receives the information from the one or more APs, performs analysis and evaluates the radio environment. Based on the results of the analysis, the AC centrally organises and allocates radio channels and transmission power to the one or more APs. In this way, a real-time intelligent radio resource management system may be provided to rapidly respond to changes in the radio environment of the wireless network.

Radio channels are limited resources in a WLAN, and each AP shares the limited number of non-overlapping channels. For example, in a 2.4G network, only 3 non-overlapping channels are available. The coverage of an AP may be increased by maximising its transmission power, but too high a power may cause interference with the neighbouring APs. Thus, two aspects of WRRM include channel adjustment and transmission power adjustment, which are responsible for the planning and adjustment of the functional status of the radio interfaces of the APs.

WO2010/111006 discloses a central controller which receives operating information from a plurality of base stations. The central controller uses the operating information to form adjacency information regarding the plurality of base stations and uses the adjacency information to form a resource allocation plan.

US 2006/227751 A1 describes a method, apparatus, and carrier medium carrying instructions to assign frequency channels and transmit powers for a plurality of access points of a wireless network. The method includes, until there are no more access points to which to assign a transmit power and frequency channel, selecting a next current access point, determining for a set of at least one transmit power for a set of at least one frequency channel a measure of the quality of the sub-network formed by the current access point and all already-assigned access points an evaluation metric indicative of the quality of the subnetwork, and assigning to the current access point the transmit power and frequency channel that minimizes the measure of the quality of the sub-network.

### BRIEF DESCRIPTION OF THE DRAWINGS

Figure 1 is a flow diagram of an example of a radio resource management method;
Figure 2 is a flow diagram of an implementation example of a transmission power adjustment method;
Figure 3 is a flow diagram of an implementation example of a method for assembling a high-density group;
Figure 4 is a flow diagram of an implementation example of a method for determining if a radio can be turned off;
Figure 5 is a flow diagram of an implementation example of a channel adjustment method within a high-density group;
Figure 6 is a flow diagram of an implementation example of a transmission power adjustment method within a high-density group;
Figure 7 is a flow diagram of an implementation example of an adjustment process when a radio leaves a high-density group;
Figure 8 is a schematic diagram depicting the formation of a high-density group; and
Figure 9 is a schematic diagram of an example of an AC.

### DETAIL DESCRIPTION OF THE EMBODIMENTS

Examples of methods and devices for radio resource management in a wireless communication network will now be explained with reference to the accompanying drawings.

In the following examples, a communication network, such as a wireless LAN, comprises an AC such as an access controller, which controls accesses to the network by one or more access points. The AC manages a plurality of APs, each of which provides one or more radio frequency interfaces (hereinafter "radios") that allows one or more wireless client devices to access the network, and allocates the available radio resources of the network to the plurality of APs. Each radio of the respective AP spans a coverage area providing a wireless service.

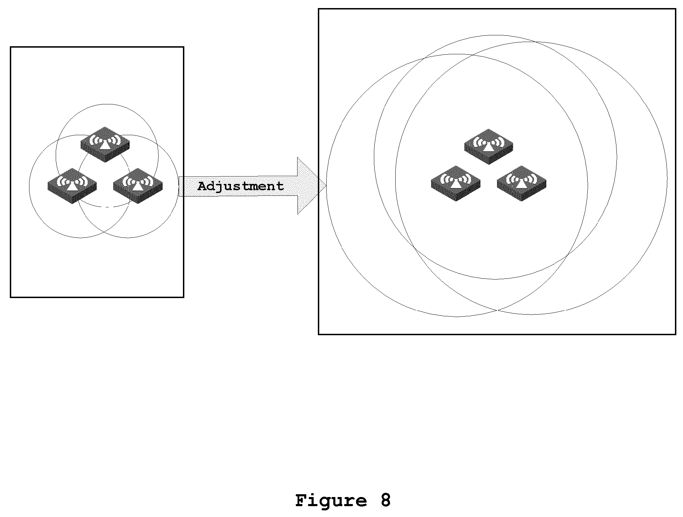

An example of the present disclosure provides a method of radio resource management for a communication network. **Figure 8** schematically illustrates an example, in which three radios corresponding to three respective APs operating on overlapping channels are deployed closely to one another. Due to the close proximity of the three APs, there may be a risk of interference even if the transmission power of one or more of the radios has been adjusted to a minimum transmission power. The configuration of the three radios and the corresponding three APs before the method is applied is shown on the left. As part of the method, the AC determines that the three radios are in a high-density deployment configuration, and configures (or join) the three radios into a high-density group. The AC then adjusts the channel assignment of the three radios on the basis that the three radios belong to the same high-density group. For example, the AC may assign a non-overlapping channel to each of the three radios. The configuration of the three radios after the adjustments is shown on the right.

By recognizing a high-density deployment configuration, the method according to the example is able to perform channel and transmission power adjustments accordingly. In one example, if after the adjusted channel assignment, the channels no longer overlap, channel interference may be minimized and the transmission power of each radio may accordingly be adjusted to a higher transmission power.

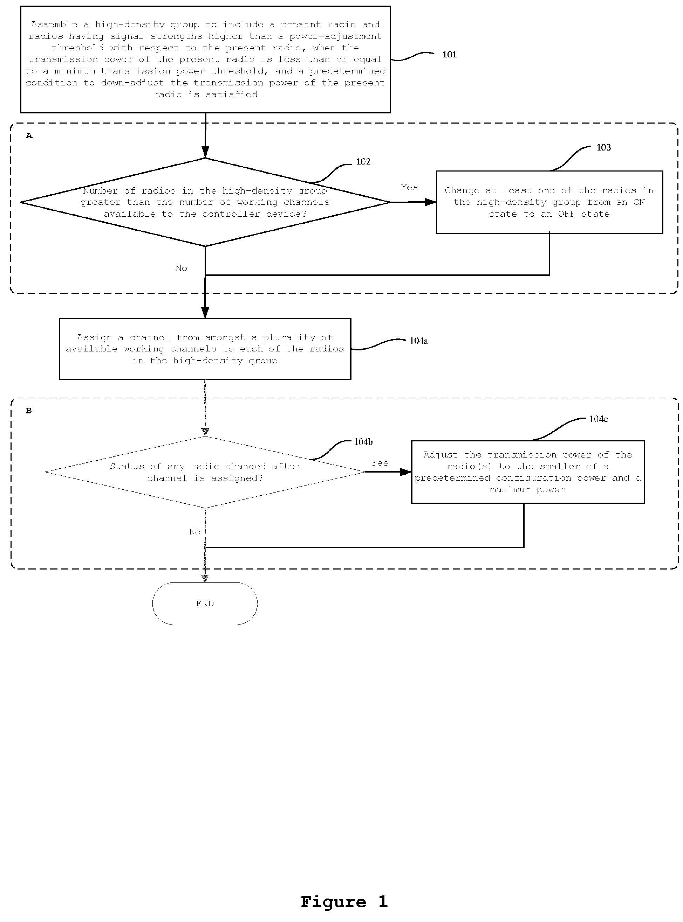

**Figure 1** is a flow diagram depicting an example of a radio resource management method. In the example of Figure 1, an AC performs radio resource management on a radio (hereinafter "present radio") that is one of a plurality of radios managed by the AC. The AC detects a plurality of neighbour radios with respect to the present radio by determining the strength of signals measured at the present radio. As an example, the radios may be sorted by the signal strengths measured at the present radio, and the neighbour radios may be determined to be a predetermined number of radios with the highest signal strength amongst the plurality of radios. For example, the predetermined number may be a neighbour factor or any other suitable parameter or number.

At block 101, when the AC determines that a predetermined condition to down-adjust the transmission power of the present radio is satisfied, the AC determines whether the transmission power of the present radio is no greater than a predetermined minimum transmission power threshold. Upon determining that the transmission power of the present radio is less than or equal to the minimum transmission power threshold, the AC assembles a high-density group to include the present radio and each of the neighbour radios having a signal strength (as measured at the present radio) that is higher than a power-adjustment threshold.

As an example, the predetermined condition to down-adjust the transmission power of the present radio may be when the difference between the signal strength of a neighbour radio having the weakest signal strength amongst the plurality of neighbour radios and the power-adjustment threshold is higher than a predetermined down-adjustment interval.

In the example, if the transmission power of the present radio is already less than or equal to the minimum transmission power threshold but when the AC determines that it is necessary to down-adjust the transmission power of the present radio, the AC then determines that the present radio is in a high-density AP deployment region, and determines that it is necessary to assemble the present radio into a high-density group. The AC may create a new high-density group to include the present radio and the plurality of neighbour radios, or it may determine that a neighbour radio already belongs to an existing high-density group and assembles the present radio into the existing high-density group. The process of the AC determining whether to create a new high-density group or to assemble the present radio into an exiting high-density group will be described later.

In Figure 1, the dashed-lined boxes A and B show the possible additional part of the radio resource management method. In some examples, it may be desirable to implement the optional boxes A and/or B, but it should be apparent to a person skilled in the art that the optional features may be omitted in some cases.

At block 102, the AC determines if the number of radios in the high-density group is greater than the number of available channels. The number of available channels may be determined by the radio frequency band supported by the APs and may be different in different countries. For example, the number of channels provided by the 2.4 GHz band is 11 channels in the US, 13 channels in Europe and 14 channels available in Japan. If there are more radios in the high-density group than the number of available channels, the AC changes one or more of the radios in the high-density group from an ON state to an OFF state at block 103. When in the ON state, communications to and from a radio is enabled such that the radio is able to provide a wireless service, while in the OFF state, communications to and from the radio is disabled. A radio may have a status of "can be turned OFF" allowing the AC to change its state from ON to OFF, or may have a status of "cannot be turned OFF". The determination of the two statuses will be described later.

If it is determined that the number of radios in the high-density group is no greater than the number of available channels, or that the AC is unable to turn OFF any other radio, the AC then assigns a channel from amongst the available channels to each of the radios in the high-density group at block 104a.

The AC then determines, at block 104b, whether the status of any of the radios in the high-density group has changed after channel assignment. A status change may include a radio stopping operation, or being assigned a new channel, etc. If the status of a radio has changed, the AC adjusts the transmission power of the radio to the smaller of a predetermined configuration power and a maximum transmission power at block 104c.

At the end of the process of assembling a high-density group, a master radio is selected for the group. The channel adjustment and transmission power adjustment within the high-density group is then performed with reference to the master radio based on the signal strength of the radios in the group measured with respect to the master radio. The process of selecting a master radio and the channel and transmission power adjustment processes will be described later.

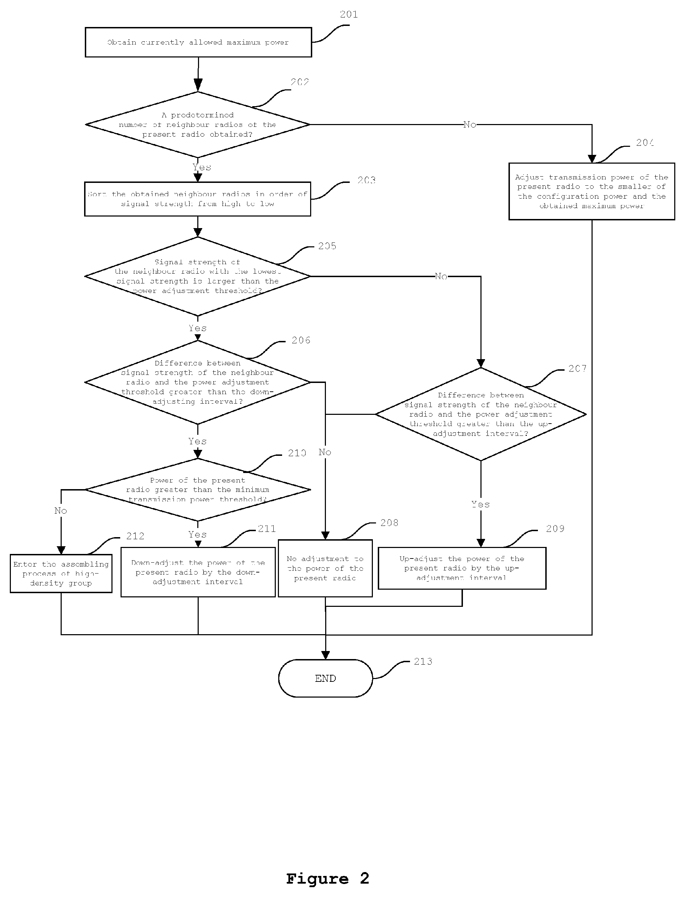

An example of a transmission power adjustment process performed before the present radio is assembled into a high-density group is shown in **Figure 2****.**

At block 201, the AC obtains a value for the maximum transmission power permitted under the present conditions. For example, the current radio environment, the deployment density of the APs in the region, etc. An important factor that affects the maximum transmission power includes the hardware and the country in which the devices are deployed. Each country has specific provisions regarding radio bandwidths and frequency usage, whereas radio hardware may limit transmission power and antenna gain.

At block 202, the AC determines the signal strength of each neighbour radio measured with respect to the present radio, and obtains a predetermined number of neighbour radios with the strongest signal strengths. The predetermined number may be a neighbour factor corresponding to the number of available channels. For example, the neighbour factor may be set as the number of available channel -1. The neighbour factor may be set to any other number depending on specific implementation conditions and preferences.

If the AC cannot obtained the predetermined number of neighbour radios, at block 204, the AC adjust the transmission power of the present radio to the smaller of a predetermined configuration power and the obtained maximum transmission power, and the process ends at block 213. The predetermined configuration power may be determined, for example, by using a reference radio interface configured to function at the predetermined reference power. During transmission power adjustment, transmission power may be adjusted within a specified range based on the reference power.

When the AC successfully obtained the predetermined number of neighbour radios, at block 203, the obtained predetermined number of neighbour radios are sorted in order of signal strength from the highest to the lowest.

Then, at block 205, the AC determines if the signal strength of the neighbour radio with the lowest signal strength amongst the predetermined number of neighbour radios is higher than the power-adjustment threshold. In the example, the power-adjustment threshold is a predetermined parameter determined based on the strength of the signal from a neighbour radio measured at the present radio and set at a level such that the level of interference from the neighbour radio at the present radio is at an acceptable range.

If the signal strength is higher, at block 206, the AC determines if the difference between the signal strength of the neighbour radio and the power adjustment threshold is greater than the down-adjustment threshold. If the signal strength is not higher, at block 207, the AC determines if the difference between the signal strength of the neighbour radio and the power adjustment threshold is greater than the up-adjustment interval. The down-adjustment interval and the up-adjustment interval are predetermined parameters based on the specific implementation and preferences. For example, the down-adjustment interval may be set at two steps, while the up-adjustment interval may be set at one step. The size of the intervals may affect the frequency of adjustment and/or the appearance of coverage holes.

In the case of block 207, if the difference is greater than the up-adjustment interval, the AC adjusts the transmission power of the present radio upwards according to the up-adjustment interval at block 209, and the process ends at block 213. If the difference if no greater than the up-adjustment interval, at block 208, no adjustment to the transmission power of the present radio is performed.

In the case of block 206, if the difference is no greater than the down-adjustment interval, at block 208, no adjustment to the transmission power of the present radio is performed. If the difference is greater than the down-adjustment interval, at block 210, the AC determines if the transmission power of the present radio is greater than the minimum transmission power threshold.

If the transmission power is no greater than the minimum transmission power threshold, the AC adjusts the transmission power of the present radio downwards according to the down-adjustment interval at block 211. In the example, the transmission power of the present radio is no less than the minimum transmission power threshold after the adjustment. The minimum transmission power threshold may be determined, for example, by the limitation of hardware.

If the transmission power is greater than the minimum transmission power threshold, the process continues to a high-density group assembling process at block 212.

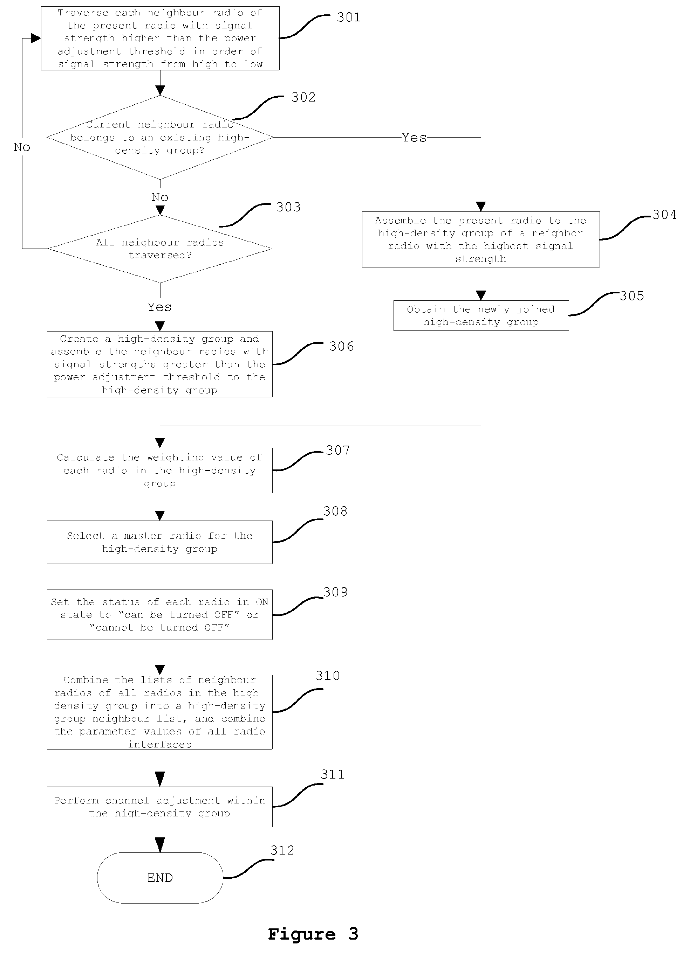

**Figure 3** depicts the process of the AC assembling the present radio into a high-density group.

At block 301, the AC traverses each of the neighbour radios of the present radio having signal strengths higher than the power adjustment threshold in order of signal strengths from the highest to the lowest. As the distance between different APs varies, the signal strength of a radio measured at a particular AP may be different from another radio. In the present example, the AC traverses the plurality of neighbour radios in order of their signal strengths with respect to the present radio from the strongest one to the weakest one, but the AC may be configured to traverse the neighbour radios in different order or based on other parameters.

At block 302, the AC determines if any of the neighbour radios already belongs to an existing high-density group. If the current neighbour radio does not belong to an existing high-density group, at block 303, the AC determines if there is any other neighbour radio that has not yet been checked.

At block 304, if a neighbour radio is determined to belong to an existing high-density group, the AC assembles the present radio into the existing high-density group. If more than one neighbour radios are determined to belong to existing high-density groups, the AC assembles the present radio into the high-density group of the neighbour radio that has the highest signal strength amongst the plurality of neighbour radios determined to belong to existing high-density groups. In the example, since the AC traverse the plurality of neighbour radios in order of signal strength from the highest to the lowest, the first neighbour radio determined to belong to an existing high-density group at block 302 would be one that has the highest signal strength. The AC then obtains the high-density group into which the present radio is assembled at block 305, and proceeds to block 307.

At block 306, when the AC determines that none of the plurality of neighbour radios belongs to an existing high-density group, it creates a new high-density group, and assemble the present radio together with the neighbour radios into the newly created high-density group.

At block 307, the AC calculates the weighting value of each of the radios in the high-density group. The weighting value of a given radio may be determined, for example, by using the equation: 0×FFFFFFFF - sum of the signal strengths of all neighbour radios (mW) * signal strength weight - MAC address * MAC weight. Signal strength weight and MAC weight are predetermined values based on the specific implementation.

At block 308, the AC selects a radio having the highest weighting value as a master radio of the high-density group.

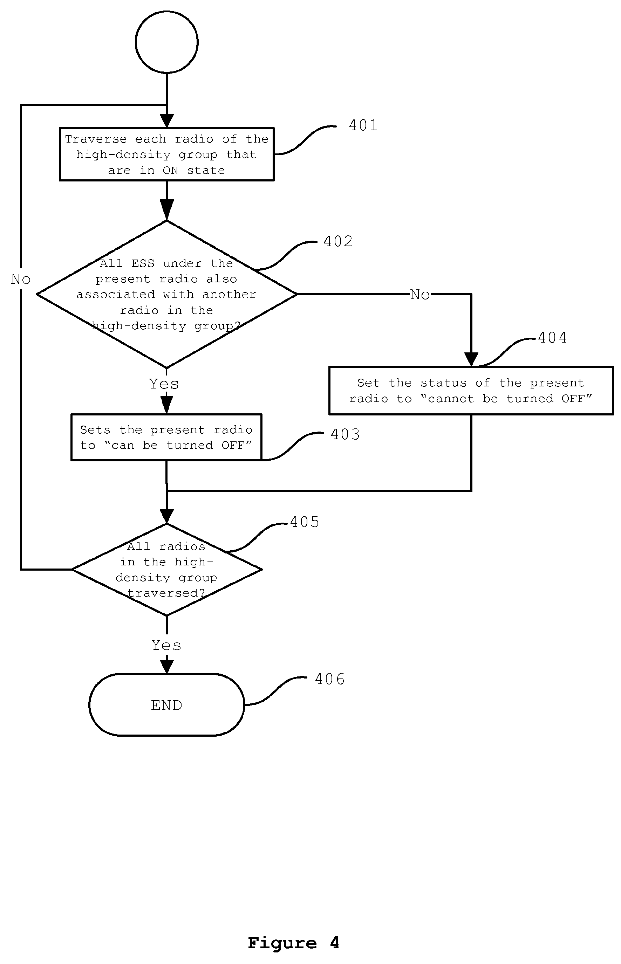

At block 309, the AC sets the status of each radio in the high-density group to "can be turned OFF" or "cannot be turned OFF". An example of the process for determining whether the status of a radio is "can be turned OFF" or "cannot be turned OFF" is depicted in **Figure 4****.**

At block 401, the AC traverses each radio of the high-density group that is in the ON state.

At block 402, the AC determines if all extended service sets (ESS) of the present radio are associated with another radio in the high-density group the status of which is "cannot be turned OFF". If so, the AC sets the status of the present radio to "can be turned OFF" at block 403. If not, the AC sets the status of the present radio to "cannot be turned OFF" at block 404.

At block 405, the AC confirms whether all radios in the high-density group have been traversed. When it is determined that all radios in the high-density group have been traversed, the process ends at block 406.

Turning back to Figure 3, after the AC sets the status of each radio at block 309, it combines the lists of neighbour radios of all radios in the high-density group into a high-density group neighbour list at block 310, and combines the various status values of the air interface of all the radios.

In the example, each radio may include the following parameters:
Neighbour list, which records the MAC address and signal strength of each neighbour radio;
Channel list, which records the rate of packet loss with respect to each channel;
The channel used by the present radio;
The transmission power of the present radio, the configured channel and the configured transmission power;
The radio module, which may be the IEEE 802.11b IEEE 802.11g 2.4 GHz module or the IEEE 802.11a 5 GHz module, which is the supported frequency range of the radio; and
The interference value of the present radio, for example, a higher interference value may represent higher interference.

After the combination at block 310, the signal strength of the high-density group represents the signal strengths of all radios in the high-density group. The signal strength of the high-density group may, for example, be an average signal strength of each radio in the high-density group.

At block 311, the AC performs a channel adjustment process within the high-density group, and the process ends at block 312.

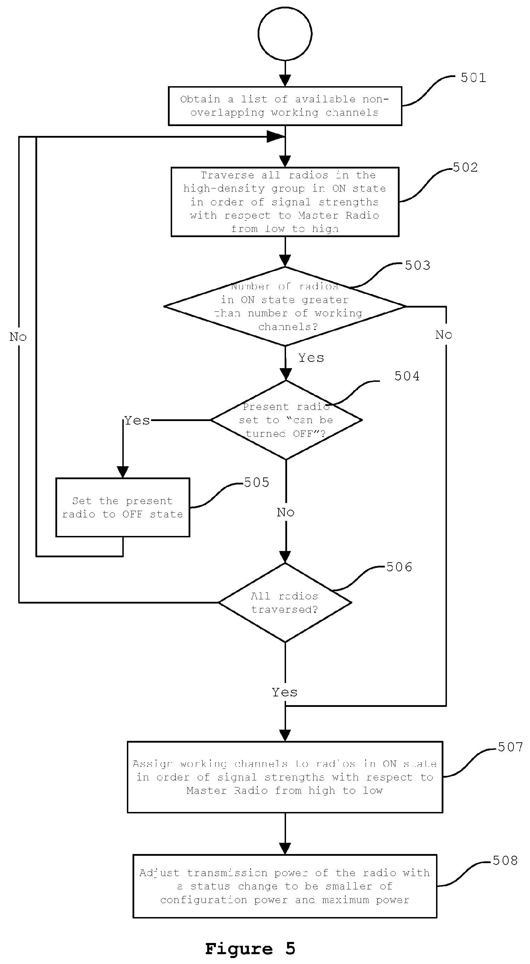

An example of a process for channel adjustment within the high-density group is depicted in **Figure 5****.**

At block 501, the AC obtains a list of non-overlapping channels available in the network.

At block 502, the AC traverses each of the radios in the high-density group in the ON state in the order of their signal strengths measured with respect to the master radio from the radio with the lowest signal strength to the radio with the highest signal strength.

Then at block 503, the AC determines if the number of radios in the ON state is greater than the number of available channels determined at block 501.

If so, the AC determines if the status of the present radio is set to "can be turned OFF" at block 504. If so, the AC sets the status of the present radio to the OFF state at block 505 and returns to block 502. If not, the AC determines if there are any remaining radio in the high-density group to be traversed at block 506. If so, the AC returns to block 502 and traverse the next radio.

When all radios in the high-density group have been traversed, at block 507, the AC assigns a channel to each of the radios in the ON state in the order of their signal strengths with respect to the master radio starting from the radio with the highest signal strength.

At block 503, if the number of radios in the ON state is no greater than the number of available channels, the AC proceeds directly to block 507.

At block 507, if all available channels have been assigned once to a radio, but there are remaining radios in the high-density group that have not yet been assigned a channel, the AC assigns one of the channels again to each of the remaining radios in the order of channel interference starting by assigning a channel to a remaining radio that results in the smallest channel interference.

After the channel adjustment, for each radio in the high-density group the status of which has changed, the AC adjusts the transmission power of the radio to be the smaller of the configuration power and the maximum power at block 508. A change of status of a radio may include, for example, the radio changing to the OFF state, the radio being assigned a channel different from a previously assigned channel and changes to one or more parameters of the radio.

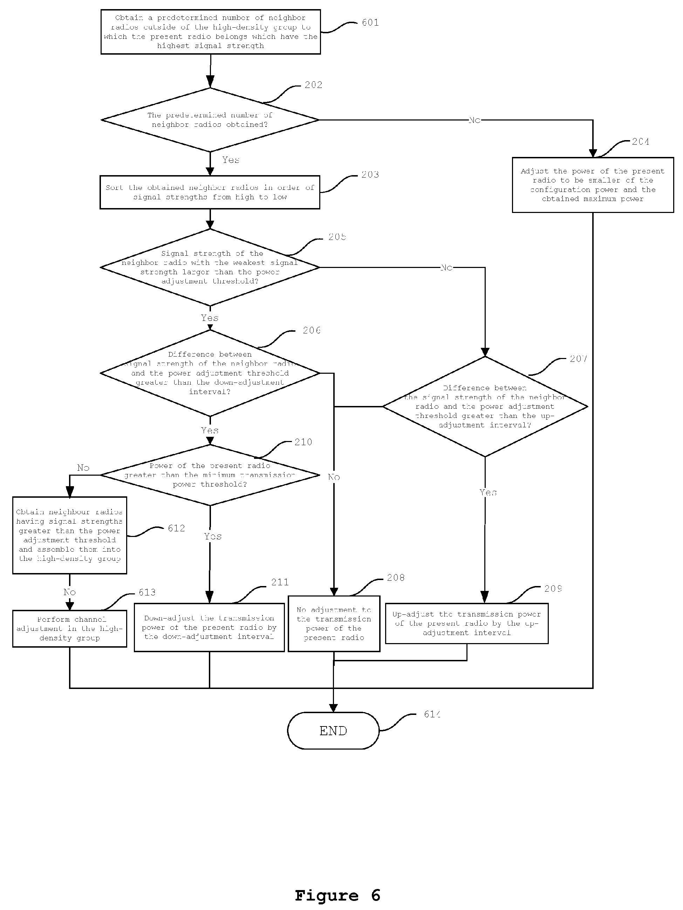

Thereafter, a transmission power adjustment process is performed within the high-density group, an example of which is depicted in **Figure 6****.** Some parts of the process of Figure 6 are the same as the transmission power adjustment process of Figure 2, and same reference numerals are used for these parts.

At block 601, the AC obtains a predetermined number of neighbour radios that are outside of the high-density group to which the present radio belongs, which have the highest signal strength measured with respect to the present radio. In the example, other radios belonging to the same high-density group as the present radio are excluded. Here again, the predetermined number may be a neighbour factor that may be predetermined based on the number of available channels.

The AC then determines if the predetermined number of neighbour radios are obtained at block 202. Blocks 202 to block 211 have already been described with reference to Figure 2 and will not be described again here.

If the AC determines that the transmission power of the present radio is no greater than the minimum transmission power threshold, but the difference between the signal strength of the neighbour radio, which has the weakest signal strength amongst the predetermined number of neighbour radios, and the power adjustment threshold is greater than the down-adjustment interval, the AC determines that the present radio and the predetermined number of neighbour radios form a high-density deployment region. Thus, at block 612, the AC obtains radios of the predetermined number of neighbour radios with signal strengths higher than the power adjustment threshold and assembles them into the high-density group.

After assembling the neighbour radios into the high-density group, the AC performs channel adjustment within the high-density group at block 613, and the process ends at block 614.

In an example, the AC may start a timer for the high-density group after the selection of a master radio. If a radio in the high-density group fails to detect the master radio when the timer expires, the AC causes the radio to leave the high-density group. At any other time, if the AC determines that a radio in the high-density group has stopped providing service, the AC causes the radio to leave the high-density group. In the example, the AC determines that a radio has stopped providing service when, for example, the radio is OFF, the use of the radio is no longer permitted, the radio has closed all service templates, or the corresponding AP has a broken link.

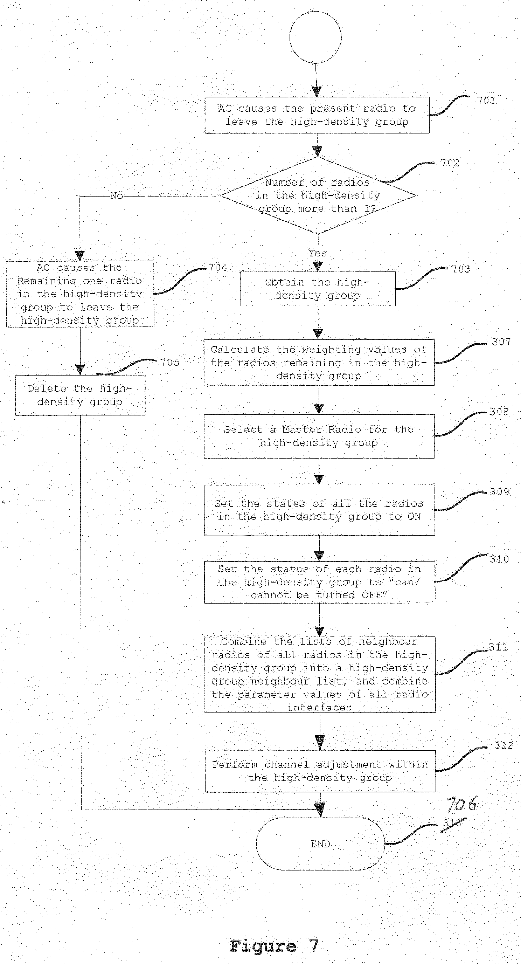

When a radio is caused to leave the high-density group, the process is depicted in **Figure 7****.** Some parts of the process of Figure 7 are the same as the process of assembling a high-density group of Figure 3, and same reference numerals are used for these parts.

At block 701, the AC causes the present radio to leave the high-density group.

The AC then determines, at block 702, if the number of radios in the high-density group remains more than one. If so, the AC obtains the high-density group at block 703 and reorganizes the high-density group at blocks 307 to block 312, which have already been described with reference to Figure 3 and will not be described again here.

If only one radio remains in the high-density group, the AC causes the remaining one radio to leave the high-density group at block 704, and deletes the high-density group at block 705. The process then ends at block 706.

In the examples, the APs provide a single radio that support the same radio frequency band such that each AP may monitor the other APs, for example to measure signal strength and channel interference. In other examples, it may be possible for one or more APs may have two or more radios that support different radio frequency bands.

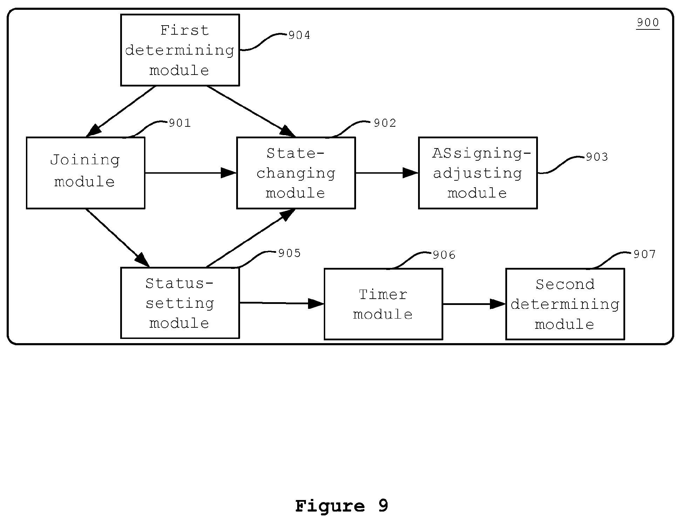

An example of an AC which may perform the function of the AC in the processes described above is shown schematically in **Figure 9****.**

In the example, the AC 900 manages a plurality of radios in a communication network, and performs the radio resource management processes as described above with reference to Figures 1 to 7 with respect to a present radio. The AC 900 comprises a joining module 901 and an assigning-adjusting module 903.

The joining module 901 is configured to join a high-density group to include the present radio and radios having signal strengths with respect to the present radio that are higher than a predetermined power-adjustment threshold, when it is determined that the transmission power of the present radio is less than or equal to a minimum transmission power threshold, and that a predetermined condition to down-adjust the transmission power of the present radio is satisfied.

The predetermined condition may be when the difference between the signal strength, measured with respect to the present radio, of a radio having the weakest signal strength amongst the radios having signal strengths higher than a power-adjustment threshold and the power-adjustment threshold is higher than a predetermined down-adjustment interval.

The assigning-adjusting module 903 is configured to assign a channel from amongst a plurality of available channels to each of the radios in the high-density group.

In an example, the AC 900 may comprise a state-changing module 902 configured to change at least one of the radios in the high-density group from an ON state, in which communication is enabled, to an OFF state, in which communication is disabled, when the number of radios in the high-density group is greater than the number of available channels.

In an example, the assigning-adjusting module 903 may be configured to adjust the transmission power of a radio in the high-density group to the smaller of a predetermined configuration power and a maximum power if the status of the radio is changed after a channel is assigned.

In an example, the AC 900 may comprise a first determining module 904 configured to determine whether at least one of the radios having signal strengths higher than the power-adjustment threshold belongs to a respective existing high-density group, and, in the case that there is one or more existing high-density groups, to cause the joining module 901 to join the present radio into the respective existing high-density group of the radio that has the highest signal strength amongst the radios belonging respective to the one or more existing high-density groups.

In an example, if no existing high-density group is found, the joining module 901 may be configured to create a new high-density group to include the present radio and the radios having signal strengths higher than the power-adjustment threshold.

In the example, when determining the signal strength of each radio, the first determining module may be configured to determine that the signal strength of an existing high-density group is the signal strength of a radio if the radio belongs to the existing high-density group.

In an example, the first determining module 904 may be configured to detect, with respect to the present radio, a predetermined number of neighbour radios that are not currently included in the high-density group which have the highest signal strength amongst the plurality of radios. Furthermore, the first determining module 904 may be configured to determine whether a radio that has the weakest signal strength amongst the predetermined number of neighbour radios has a signal strength higher than the power-adjustment threshold, and whether the difference between the signal strength of the determined radio and the power-adjustment threshold is higher than a predetermined down-adjustment interval, if so, the first determine module 904 may be configured to cause the joining module 901 to join the predetermined number of neighbour radios into the high-density group.

In an example, the AC 900 may comprise a status-setting module 905 configured to traverse each radio of the high-density group that are in an ON state, and to determine whether an Extended Service Set ESS of the present radio is associated with another radio in the high-density group, where the status of the another radio is set to "cannot be turned OFF". If the determination by the status-setting module 905 is positive, the status-setting module 905 may be configured to set the status of the present radio to "can be turned OFF", otherwise, if the determination is negative, to set the status of the present radio to "cannot be turned OFF". In the example, the state-changing module 902 may be configured to change at least one of the radios in the high-density group having the status "can be turned OFF" to the OFF state when the number of radios in the high-density group is greater than the number of available channels.

In an example, the status-setting module 905 may be configured to select a radio from amongst the radios in the high-density group as a master radio, and the state-changing module 902 is configured to change at least one of the radios in the high-density group having the status "can be turned OFF" to the OFF state in order of their signal strengths with respect to the master radio from the radio with the lowest signal strength to the radio with the highest signal strength. The status-setting module 905 may be configured to select a master radio by calculating a weighting value of each radio, and determining the radio with the highest weighting value to be the master radio.

In an example, the assigning-adjusting module 903 may be configured to assign a channel from amongst the plurality of available channels to each of the radios in the high-density group in the ON state in order of their signal strength with respect to the master radio from the radio with the highest signal strength to the radio with the lowest signal strength. If the number of available channels is less than the number of radios in the ON state, after each of the available channels has been assigned once, for each remaining radio that has not yet been assigned a channel, the assigning-adjusting module 903 may be configured to assign a channel from amongst the plurality of channels already assigned once to each remaining radio in order of channel interference from the radio with the weakest interference to the radio with the strongest interference.

In an example, the AC 900 may comprise a timer module 906 and a second determining module 907. In the example, the timer module 906 may be configured to start a timer when the master radio is selected, and the second determining module 907 may be configured to cause a radio to leave the high-density group when it is determined that the radio fails to detect the master radio before the timer expires, or when it is determined that the radio no longer provides a service.

By implementing the examples described above of various processes for radio resource management and the examples of an AC, it is possible to recognise a situation when a plurality of APs are in a high density deployment configuration during a transmission power adjustment process. In this way, the plurality of corresponding radios may be joined into a high-density group, and channel and transmission power adjustments may be performed on radios on the basis of the high-density group. By implementing a channel adjustment process within the high-density group as described in the examples above, channel overlapping amongst a plurality of radios is minimized, allowing the transmission power of the radios in the high-density group to be increased.

Although the flow diagrams described above show a specific order of execution, the order of execution may differ from that which is depicted.

The above examples can be implemented by hardware, software, firmware, or a combination thereof. For example, the various methods and functional modules described herein may be implemented by a processor (the term processor is to be interpreted broadly to include a CPU, processing unit, ASIC, logic unit, or programmable gate array etc.). The methods and functional modules may all be performed by a single processor or divided amongst several processers. The methods and functional modules may be implemented as machine readable instructions executable by one or more processors, hardware logic circuitry of the one or more processors, or a combination thereof. Further, the teachings herein may be implemented in the form of a software product, the computer software product being stored in a storage medium and comprising a plurality of instructions for making a computer device (e.g. a personal computer, a server or a network device such as a router, switch, access point etc.) implement the method recited in the examples of the present disclosure.

It should be understood that embodiments of the method for radio resource management in a wireless communication network and embodiments of the AC above are implementation examples only, and do not limit the scope of the invention. Numerous other changes, substitutions, variations, alternations and modifications may be ascertained by those skilled in the art, and it is intended that the present disclosure encompass all such changes, substitutions, variations, alterations and modifications as falling within scope of the appended claims.

## Claims

1. A method of radio resource management for a communication network including an Access Controller and a plurality of Access Points, the Access Controller managing the plurality of Access Points each of which provides a radio for accessing the network, the method comprising:
the Access Controller:
making a determination (206, 210) that the transmission power of a present radio corresponding to an Access Point is less than or equal to a minimum transmission power threshold, and
that a difference between a first parameter and a second parameter is higher than a predetermined down-adjustment interval;
the first parameter being the signal strength with respect to the present radio of a radio having a weakest signal strength amongst the radios which correspond to other Access Points and which have signal strengths higher than a power-adjustment threshold; and the second parameter being said power-adjustment threshold;
in response to said determination, determining if at least one of the radios having signal strengths higher than the power-adjustment threshold with respect to the present radio belongs to a respective existing high-density group (302), and if yes then joining (101, 202, 304, 306) the present radio into the respective existing high-density group of a radio that has the highest signal strength (304), and if not then creating a high-density group and joining the present radio and radios having signal strengths higher than the power adjustment threshold into the high-density group (306);
changing (103) at least one of the radios in the high-density group from an ON state, in which communication is enabled, to an OFF state, in which communication is disabled, when a number of radios in the high-density group is greater than a number of a plurality of available channels; and
assigning (104a) a channel from amongst the plurality of available channels to each of the radios in the high- density group, and adjusting (104c) a transmission power of a radio in the high-density group to the smaller of a predetermined configuration power and a maximum power if the status of the radio is changed after a channel is assigned.

2. The method of claim 1 further comprising the Access Controller detecting, with respect to the present radio, a predetermined number of neighbour radios with a highest signal strength amongst radios that are not currently included in the high-density group (601), and upon determining that a radio that has a weakest signal strength amongst the predetermined number of neighbour radios has a signal strength higher than the power-adjustment threshold (203), and a difference between the signal strength of the radio having the weakest signal strength and the power-adjustment threshold is higher than the predetermined down-adjustment interval (205), joining the predetermined number of neighbour radios into the high-density group (612).

3. The method of claim 2 wherein, when determining the signal strength of each neighbour radio of the predetermined number of neighbour radios, the Access Controller determines that the signal strength of an existing high-density group is the signal strength of a neighbour radio if the neighbour radio belongs to the existing high-density group.

4. The method of claim 1 further comprising the Access Controller traversing each radio of the high-density group that are in an ON state when communication is enabled (401), and determining that an Extended Service Set "ESS" of the present radio is associated with another radio in the high-density group (402), the another radio having a status "cannot be turned OFF", indicating that the another radio is set not to be changed from the ON state to an OFF state, when communication is disabled, whereupon the Access Controller sets the status of the present radio to "can be turned OFF" (403), otherwise sets the status of the present radio to "cannot be turned OFF" (404), and the Access Controller changing at least one of the radios in the high- density group having the status "can be turned OFF" to the OFF state when the number of radios in the high-density group is greater than the number of available channels (505).

5. The method of claim 4 further comprising the Access Controller selecting a radio from amongst the radios in the high-density group to be a master radio (308), wherein the Access Controller changing at least one of the radios in the high-density group having the status "can be turned OFF" to the OFF state is performed in order of the signal strength of each radio in the high-density group having the status "can be turned OFF" from low to high with respect to the master radio.

6. The method of claim 5 wherein the assigning a channel from amongst the plurality of available channels to each of the radios in the high-density group includes:
assigning a channel to each of the radios in order of the signal strength of each radio from high to low with respect to the master radio (507); and
when the number of working channels is less than the number of radios in the ON state, after each of the available channels has been assigned once, for each remaining radio that has not yet been assigned a channel, the Access Controller assigns a channel from amongst the plurality of available channels already assigned once to each remaining radio in order of channel interference from weak to strong.

7. The method of claims 5 or 6 further comprising the Access Controller starting a timer when the master radio is selected, and causing a radio to leave the high-density group when it is determined that the radio fails to detect the master radio before the timer expires, or when it is determined that the radio no longer provides a service.

8. A Access Controller for radio resource management in a communication network including at least one Access Point, the Access Controller being configured to manage a plurality of Access Point each of which provides a radio for accessing the network, comprising:
a joining module (901) to create a high-density group and to join a present radio corresponding to one Access Point of the plurality and, with respect to the present radio, radios corresponding to other Access Points of the plurality having signal strengths higher than a power-adjustment threshold into the high-density group, upon determining that the transmission power of the present radio is less than or equal to a minimum transmission power threshold, and that a difference between a first parameter that is the signal strength with respect to the present radio of a radio having a weakest signal strength amongst the radios having signal strengths higher than a power-adjustment threshold and a second parameter that is the power-adjustment threshold is higher than a predetermined down-adjustment interval;
a state-changing module (902) to change at least one of the radios in the high-density group from an ON state, in which communication is enabled, to an OFF state, in which communication is disabled, when a number of radios in the high-density group is greater than a number of a plurality of available channels;
an assigning-adjusting module (903) to assign a channel from amongst the plurality of available channels to each of the radios in the high-density group, and to adjust a transmission power of a radio in the high-density group to the smaller of a predetermined configuration power and a maximum power if the status of the radio is changed after a channel is assigned; and
a first determining module (904) to determine that at least one of the radios having signal strengths higher than the power-adjustment threshold with respect to the present radio belongs to a respective existing high-density group, and to cause the joining module to join the present radio into the respective existing high-density group of a radio that has the highest signal strength amongst the at least one determined radios.

9. The Access Controller of claim 8 wherein the first determining module (904) is configured to detect, with respect to the present radio, a predetermined number of neighbour radios with a highest signal strength amongst the plurality of radios that are not currently included in the high-density group, and upon determining that a radio that has a weakest signal strength amongst the predetermined number of neighbour radios has a signal strength higher than the power-adjustment threshold, and a difference between the signal strength of the determined radio and the power-adjustment threshold is higher than a predetermined down-adjustment interval, to cause the joining module to join the predetermined number of neighbour radios into the high-density group.

10. The Access Controller of claim 9 wherein the first determining module (904) is configured to, when determining the signal strength of each neighbour radio of the predetermined number of neighbour radios, determine that the signal strength of an existing high-density group is the signal strength of a neighbour radio if the neighbour radio belongs to the existing high-density group.

11. The Access Controller of claim 8 further comprising a status-setting module (905) to traverse each radio of the high-density group that are in an ON state when communication is enabled, and to determine that an Extended Service Set "ESS" of the present radio is associated with another radio in the high-density group, the another radio having a status "cannot be turned OFF", indicating that the another radio is set not to be changed from the ON state to an OFF state, when communication is disabled, whereupon the status-setting module is configured to set the status of the present radio to "can be turned OFF", otherwise set the status of the present radio to "cannot be turned OFF", and the state-changing module is configured to change at least one of the radios in the high-density group having the status "can be turned OFF" to the OFF state when the number of radios in the high-density group is greater than the number of available channels available.

12. The Access Controller of claim 11 wherein the status-setting module (905) is configured to select a radio from amongst the radios in the high-density group to be a master radio, and the state-changing module is configured to change at least one of the radios in the high-density group having the status "can be turned OFF" to the OFF state in order of the signal strength of each radio in the high- density group having the status "can be turned OFF" from low to high with respect to the master radio.

13. The Access Controller of claim 12 wherein the assigning-adjusting module (903) is configured to assign a channel from amongst the plurality of available channels to each of the radios in the high-density group in the ON state in order of the signal strength of each radio from high to low with respect to the master radio, and when the number of available channels is less than the number of radios in the ON state, after each of the available channels has been assigned once, for each remaining radio that has not yet been assigned a channel, the assigning-adjusting module (903) is configured to assign a channel from amongst the plurality of available channels already assigned once to each remaining radio in order of channel interference from weak to strong.

14. The Access Controller of claims 12 or 13 further comprising a timer module (906) to start a timer when the master radio is selected, and a second determining module (907) to cause a radio to leave the high-density group when it is determined that the radio fails to detect the master radio before the timer expires, or when it is determined that the radio no longer provides a service.

## Patentansprüche

1. Verfahren zur Funkressourcenverwaltung für ein Kommunikationsnetz, einschließlich eines Zugriffssteuerungsgeräts und mehrerer Zugriffspunkte, wobei das Zugriffssteuerungsgerät die mehreren Zugriffspunkte verwaltet, von denen jeder eine Funkeinheit zum Zugreifen auf das Netz bereitstellt, wobei das Verfahren Folgendes umfasst:
durch das Zugriffssteuerungsgerät:
Bestimmen (206, 210), dass die Übertragungsleistung einer vorliegenden Funkeinheit, die einem Zugriffspunkt entspricht, geringer als oder ebenso hoch wie ein Mindestübertragungsleistungsgrenzwert ist und eine Differenz zwischen einem ersten Parameter und einem zweiten Parameter größer ist als ein vorgegebenes Herabregelungsintervall;
wobei der erste Parameter die Signalstärke bezogen auf die vorliegende Funkeinheit einer Funkeinheit mit einer geringsten Signalstärke unter den Funkeinheiten, die anderen Zugriffspunkten entsprechen und die Signalstärken aufweisen, die größer sind als ein Leistungseinstellungsgrenzwert, ist; und der zweite Parameter der Leistungseinstellungsgrenzwert ist;
Bestimmen, als Reaktion auf das Bestimmen, ob wenigstens eine der Funkeinheiten mit Signalstärken, die größer sind als der Leistungseinstellungsgrenzwert bezogen auf die vorliegende Funkeinheit, zu einer entsprechenden vorhandenen Gruppe mit hoher Dichte gehört (302) und, falls ja, Einbinden (101, 202, 304, 306) der vorliegenden Funkeinheit in die entsprechende vorhandene Gruppe mit hoher Dichte einer Funkeinheit, die die höchste Signalstärke aufweist (304), und, falls nein, dann Erstellen einer Gruppe mit hoher Dichte und Einbinden der vorliegenden Funkeinheit und von Funkeinheiten, die Signalstärken höher als der Leistungseinstellungsgrenzwert aufweisen, in die Gruppe mit hoher Dichte (306);
Ändern (103) wenigstens einer der Funkeinheiten in der Gruppe mit hoher Dichte von einem ON-Zustand, in dem Kommunikation aktiviert ist, in einen OFF-Zustand, in dem Kommunikation deaktiviert ist, wenn eine Anzahl von Funkeinheiten in der Gruppe mit hoher Dichte größer ist als eine Anzahl mehrerer verfügbarer Kanäle; und
Zuordnen (104a) eines Kanals aus den mehreren verfügbaren Kanälen zu jeder der Funkeinheiten in der Gruppe mit hoher Dichte und Einstellen (104c) einer Übertragungsleistung einer Funkeinheit in der Gruppe mit hoher Dichte auf den kleineren Wert aus einer vorgegebenen Konfigurationsleistung und einer Maximalleistung, wenn der Status der Funkeinheit geändert wird, nachdem ein Kanal zugeordnet wird.

2. Verfahren nach Anspruch 1, ferner umfassend, dass das Zugriffssteuerungsgerät bezogen auf die vorliegende Funkeinheit eine vorgegebene Anzahl von benachbarten Funkeinheiten mit einer höchsten Signalstärke aus Funkeinheiten bestimmt, welche gegenwärtig nicht in der Gruppe mit hoher Dichte enthalten sind (601), und, nach dem Bestimmen, dass eine Funkeinheit, die die schwächste Signalstärke unter der vorgegebenen Anzahl benachbarter Funkeinheiten hat, eine Signalstärke hat, die höher ist als der Leistungseinstellungsgrenzwert (203), und dass eine Differenz zwischen der Signalstärke der Funkeinheit mit der schwächsten Signalstärke und dem Leistungseinstellungsgrenzwert größer ist als das vorgegebene Herabregelungsintervall (205), Einbinden der vorgegebenen Anzahl von benachbarten Funkeinheiten in die Gruppe mit hoher Dichte (612).

3. Verfahren nach Anspruch 2, wobei beim Bestimmen der Signalstärke jeder benachbarten Funkeinheit der vorgegebenen Anzahl von benachbarten Funkeinheiten das Zugriffssteuerungsgerät bestimmt, dass die Signalstärke einer vorhandenen Gruppe mit hoher Dichte die Signalstärke einer benachbarten Funkeinheit ist, wenn die benachbarte Funkeinheit in die vorhandene Gruppe mit hoher Dichte gehört.

4. Verfahren nach Anspruch 1, ferner umfassend, dass das Zugriffssteuerungsgerät jede Funkeinheit der Gruppe mit hoher Dichte durchläuft, die in einem ON-Zustand ist, wenn Kommunikation aktiviert ist (401), und bestimmt, dass ein erweitertes Service-Set "ESS" der vorliegenden Funkeinheit mit einer weiteren Funkeinheit in der Gruppe mit hoher Dichte verknüpft ist (402), wobei die weitere Funkeinheit einen Status "kann nicht auf OFF geschaltet werden" aufweist, wodurch angedeutet wird, dass die weitere Funkeinheit nicht aus dem ON-Zustand in den OFF-Zustand geschaltet werden kann, wenn Kommunikation deaktiviert ist, woraufhin das Zugriffssteuerungsgerät den Status der vorliegenden Funkeinheit auf "kann auf OFF geschaltet werden" einstellt (403), und anderenfalls den Status der vorliegenden Funkeinheit auf "kann nicht auf OFF geschaltet werden" einstellt (404), und das Zugriffssteuerungsgerät wenigstens eine der Funkeinheiten in der Gruppe mit hoher Dichte mit dem Status "kann auf OFF geschaltet werden" in den OFF-Zustand umstellt, wenn die Anzahl der Funkeinheiten in der Gruppe mit hoher Dichte größer ist als die Anzahl der verfügbaren Kanäle (505).

5. Verfahren nach Anspruch 4, ferner umfassend, dass das Zugriffssteuerungsgerät eine Funkeinheit aus den Funkeinheiten in der Gruppe mit hoher Dichte als eine Master-Funkeinheit auswählt (308), wobei der Vorgang, in dem das Zugriffssteuerungsgerät wenigstens eine der Funkeinheiten in der Gruppe mit hoher Dichte, die den Status "kann auf OFF geschaltet werden" aufweist, in den OFF-Zustand umstellt, in einer Reihenfolge der Signalstärke jeder Funkeinheit in der Gruppe mit hoher Dichte mit dem Status "kann auf OFF geschaltet werden" von niedrig nach hoch mit Bezug auf die Master-Funkeinheit durchgeführt wird.

6. Verfahren nach Anspruch 5, wobei das Zuordnen eines Kanals aus den mehreren verfügbaren Kanälen zu jeder der Funkeinheiten in der Gruppe mit hoher Dichte Folgendes enthält:
Zuordnen eines Kanals zu jeder der Funkeinheiten in Reihenfolge der Signalstärke jeder Funkeinheit von hoch nach niedrig bezogen auf die Master-Funkeinheit (507); und,
wenn die Anzahl der betriebenen Kanäle geringer ist als die Anzahl der Funkeinheiten im ON-Zustand, nachdem jeder der verfügbaren Kanäle einmal zugeordnet worden ist, ordnet das Zugriffssteuerungsgerät für jede verbleibende Funkeinheit, der noch kein Kanal zugeordnet worden ist, jeder verbleibenden Funkeinheit in Reihenfolge der Kanalinterferenz von gering nach stark einen Kanal aus den mehreren verfügbaren bereits einmal zugeordneten Kanälen zu.

7. Verfahren nach Anspruch 5 oder 6, ferner umfassend, dass das Zugriffssteuerungsgerät einen Timer startet, wenn die Master-Funkeinheit ausgewählt wird, und bewirkt, dass eine Funkeinheit die Gruppe mit hoher Dichte verlässt, wenn bestimmt wird, dass die Funkeinheit die Master-Funkeinheit nicht erkennt, bevor der Timer abläuft, oder wenn bestimmt wird, dass die Funkeinheit nicht länger einen Dienst bereitstellt.

8. Zugriffssteuerungsgerät für Funkressourcenverwaltung in einem Kommunikationsnetz, wenigstens einen Zugriffspunkt enthaltend, wobei das Zugriffssteuerungsgerät konfiguriert ist, mehrere Zugriffspunkte zu verwalten, von denen jeder eine Funkeinheit zum Zugreifen auf das Netz bereitstellt, Folgendes umfassend:
ein Einbindungsmodul (901) zum Erzeugen einer Gruppe mit hoher Dichte und zum Einbinden einer vorliegenden Funkeinheit, die einem der mehreren Zugriffspunkte entspricht, sowie, bezogen auf die vorliegende Funkeinheit, von Funkeinheiten, die anderen der mehreren Zugriffspunkte entsprechen, welche höhere Signalstärken als ein Leistungseinstellungsgrenzwert aufweisen, in die Gruppe mit hoher Dichte, nach dem Bestimmen, dass die Übertragungsleistung der vorliegenden Funkeinheit geringer als oder ebenso hoch wie ein Mindestübertragungsleistungsgrenzwert ist, sowie dass eine Differenz zwischen einem ersten Parameter, bei dem es sich um die Signalstärke handelt, bezogen auf die vorliegende Funkeinheit einer Funkeinheit mit einer schwächsten Signalstärke unter den Funkeinheiten, welche Signalstärken aufweisen, die höher sind als ein Leistungseinstellungsgrenzwert, und einem zweiten Parameter, bei dem es sich um den Leistungseinstellungsgrenzwert handelt, größer ist als ein vorgegebenes Herabregelungsintervall;
ein Zustandsänderungsmodul (902) zum Ändern wenigstens einer der Funkeinheiten in der Gruppe mit hoher Dichte von einem ON-Zustand, in dem Kommunikation aktiviert ist, in einen OFF-Zustand, in dem Kommunikation deaktiviert ist, wenn eine Anzahl von Funkeinheiten in der Gruppe mit hoher Dichte größer ist als eine Anzahl mehrerer verfügbarer Kanäle;
ein Zuordnungseinstellungsmodul (903) zum Zuordnen eines Kanals aus den mehreren verfügbaren Kanälen zu jeder der Funkeinheiten in der Gruppe mit hoher Dichte und zum Einstellen einer Übertragungsleistung einer Funkeinheit in der Gruppe mit hoher Dichte auf den kleineren Wert aus einer vorgegebenen Konfigurationsleistung und einer Maximalleistung, wenn der Status der Funkeinheit geändert wird, nachdem ein Kanal zugeordnet wird; und
ein erstes Bestimmungsmodul (904) zum Bestimmen, dass wenigstens eine der Funkeinheiten, welche Signalstärken aufweisen, die höher sind als der Leistungseinstellungsgrenzwert, bezogen auf die vorliegende Funkeinheit zu einer entsprechenden vorhandenen Gruppe mit hoher Dichte gehört, und zum Bewirken, dass das Einbindungsmodul die vorliegende Funkeinheit in die entsprechende vorhandene Gruppe mit hoher Dichte einer Funkeinheit einbindet, die die höchste Signalstärke aus der wenigstens einen bestimmten Funkeinheit aufweist.

9. Zugriffssteuerungsgerät nach Anspruch 8, wobei das erste Bestimmungsmodul (904) konfiguriert ist, bezogen auf die vorliegende Funkeinheit eine vorgegebene Anzahl von benachbarten Funkeinheiten zu erkennen, welche eine höchste Signalstärke unter den mehreren Funkeinheiten aufweisen, die gegenwärtig nicht in der Gruppe mit hoher Dichte enthalten sind, und, nach dem Bestimmen, dass eine Funkeinheit, die die schwächste Signalstärke unter der vorgegebenen Anzahl benachbarter Funkeinheiten hat, eine Signalstärke hat, die höher ist als der Leistungseinstellungsgrenzwert, und dass eine Differenz zwischen der Signalstärke der bestimmten Funkeinheit und dem Leistungseinstellungsgrenzwert größer ist als ein vorgegebenes Herabregelungsintervall, zu bewirken, dass das Einbindungsmodul die vorgegebene Anzahl von benachbarten Funkeinheiten in die Gruppe mit hoher Dichte einbindet.

10. Zugriffssteuerungsgerät nach Anspruch 9, wobei das erste Bestimmungsmodul (904) konfiguriert ist, beim Bestimmen der Signalstärke jeder benachbarten Funkeinheit der vorgegebenen Anzahl von benachbarten Funkeinheiten zu bestimmen, dass die Signalstärke einer vorhandenen Gruppe mit hoher Dichte die Signalstärke einer benachbarten Funkeinheit ist, wenn die benachbarte Funkeinheit in die vorhandene Gruppe mit hoher Dichte gehört.

11. Zugriffssteuerungsgerät nach Anspruch 8, ferner ein Statuseinstellungsmodul (905) umfassend, um jede Funkeinheit der Gruppe mit hoher Dichte zu durchlaufen, die in einem ON-Zustand ist, wenn Kommunikation aktiviert ist, und um zu bestimmen, dass ein erweitertes Service-Set "ESS" der vorliegenden Funkeinheit mit einer weiteren Funkeinheit in der Gruppe mit hoher Dichte verknüpft ist, wobei die weitere Funkeinheit einen Status "kann nicht auf OFF geschaltet werden" aufweist, wodurch angedeutet wird, dass die weitere Funkeinheit nicht aus dem ON-Zustand in den OFF-Zustand geschaltet werden kann, wenn Kommunikation deaktiviert ist, woraufhin das Statuseinstellungsmodul konfiguriert ist, den Status der vorliegenden Funkeinheit auf "kann auf OFF geschaltet werden" einzustellen, und anderenfalls den Status der vorliegenden Funkeinheit auf "kann nicht auf OFF geschaltet werden" einzustellen, und das Zustandsänderungsmodul konfiguriert ist, wenigstens eine der Funkeinheiten in der Gruppe mit hoher Dichte mit dem Status "kann auf OFF geschaltet werden" in den OFF-Zustand umzustellen, wenn die Anzahl der Funkeinheiten in der Gruppe mit hoher Dichte größer ist als die Anzahl der verfügbaren Kanäle.

12. Zugriffssteuerungsgerät nach Anspruch 11, wobei das Statuseinstellungsmodul (905) konfiguriert ist, eine Funkeinheit aus den Funkeinheiten in der Gruppe mit hoher Dichte als eine Master-Funkeinheit auszuwählen und das Zustandsänderungsmodul konfiguriert ist, wenigstens eine der Funkeinheiten in der Gruppe mit hoher Dichte mit dem Status "kann auf OFF geschaltet werden" in der Reihenfolge der Signalstärke jeder Funkeinheit in der Gruppe mit hoher Dichte mit dem Status "kann auf OFF geschaltet werden" von niedrig nach hoch, bezogen auf die Master-Funkeinheit, auf den OFF-Zustand umzuschalten.

13. Zugriffssteuerungsgerät nach Anspruch 12, wobei das Zuordnungseinstellungsmodul (903) konfiguriert ist, einen Kanal aus den mehreren verfügbaren Kanälen in der Reihenfolge der Signalstärke jeder Funkeinheit von hoch nach niedrig bezogen auf die Master-Funkeinheit zu jeder der Funkeinheiten in der Gruppe mit hoher Dichte im ON-Zustand zuzuordnen und, wenn die Anzahl der verfügbaren Kanäle niedriger ist als die Anzahl der Funkeinheiten im ON-Zustand, nachdem jeder der verfügbaren Kanäle einmal zugeordnet worden ist, das Zuordnungseinstellungsmodul (903) konfiguriert ist, für jede verbleibende Funkeinheit, der noch kein Kanal zugeordnet worden ist, in Reihenfolge der Kanalinterferenz von gering nach stark jeder verbleibenden Funkeinheit einen Kanal aus den mehreren verfügbaren bereits einmal zugeordneten Kanälen zuzuordnen.

14. Zugriffssteuerungsgerät nach Anspruch 12 oder 13, ferner Folgendes umfassend: ein Timermodul (906), um einen Timer zu starten, wenn die Master-Funkeinheit ausgewählt wird, und ein zweites Bestimmungsmodul (907), um zu bewirken, dass eine Funkeinheit die Gruppe mit hoher Dichte verlässt, wenn bestimmt wird, dass die Funkeinheit die Master-Funkeinheit nicht erkennt, bevor der Timer abläuft, oder wenn bestimmt wird, dass die Funkeinheit nicht länger einen Dienst bereitstellt.

## Revendications

1. Procédé de gestion de ressources radio pour un réseau de communication comprenant un contrôleur d'accès et une pluralité de points d'accès, le contrôleur d'accès gérant la pluralité de points d'accès fournissant respectivement une radio pour l'accès au réseau, le procédé comprenant :
le contrôleur d'accès :
détermination (206, 210) du fait que la puissance de transmission d'une radio actuelle correspondant à un point d'accès est inférieure ou égale à un seuil de puissance de transmission minimum, et du fait qu'une différence entre un premier paramètre et un deuxième paramètre est supérieure à un intervalle prédéterminé de réglage vers le bas ;
le premier paramètre étant l'intensité de signal par rapport à la radio actuelle d'une radio présentant le signal le plus faible parmi les radios correspondant à d'autres points d'accès et dont les intensités de signal sont supérieures à un seuil de réglage de puissance ; et le deuxième paramètre étant ledit seuil de réglage de puissance ;
en réponse à ladite détermination, détermination de l'appartenance d'au moins l'une des radios présentant des intensités de signal supérieures au seuil de réglage de puissance par rapport à la radio actuelle à un groupe de haute densité existant respectif (302), et si oui, ajout (101, 202, 304, 306) de la radio actuelle au groupe de haute densité existant respectif d'une radio présentant la plus forte intensité de signal (304), et si non, création d'un groupe de haute densité et ajout de la radio actuelle et des radios présentant des intensités de signal supérieures au seuil de réglage de puissance au groupe de haute densité (306) ;
passage (103) d'au moins l'une des radios dans le groupe de haute densité d'un état de marche, dans lequel la communication est possible, à un état d'arrêt, dans lequel la communication est interrompue, lorsqu'un nombre de radios dans le groupe de haute densité est supérieur à un nombre d'une pluralité de canaux disponibles ; et
attribution (104a) d'un canal parmi la pluralité de canaux disponibles à chacune des radios dans le groupe de haute densité, et réglage (104c) d'une puissance de transmission d'une radio dans le groupe de haute densité à la plus petite parmi une puissance de configuration prédéterminée et une puissance maximale, si le statut de la radio est modifié une fois que le canal a été attribué.

2. Procédé selon la revendication 1, comprenant en outre la détection, par le contrôleur d'accès, par rapport à la radio actuelle, d'un nombre prédéterminé de radios voisines avec une intensité de signal la plus élevée parmi les radios qui ne sont actuellement pas comprises dans le groupe de haute densité (601), et, lors de la détermination du fait qu'une radio présentant l'intensité de signal la plus faible parmi le nombre prédéterminé de radios voisines a une intensité de signal supérieure au seuil de réglage de puissance (203), et qu'une différence entre l'intensité de signal de la radio ayant l'intensités de signal la plus faible et le seuil de réglage de puissance est supérieure à l'intervalle prédéterminé de réglage vers le bas (205), l'ajout du nombre prédéterminé de radios voisines au groupe de haute densité (612).

3. Procédé selon la revendication 2, dans lequel, lors de la détermination de l'intensité de signal de chaque radio voisine du nombre prédéterminé de radios voisines, le contrôleur d'accès détermine que l'intensité de signal d'un groupe de haute densité existant est l'intensité de signal d'une radio voisine si la radio voisine appartient au groupe de haute densité existant.

4. Procédé selon la revendication 1, comprenant en outre la traversée, par le contrôleur d'accès, de chaque radio du groupe de haute densité qui se trouve dans un état de marche lorsque la communication est activée (401), et la détermination du fait qu'un ensemble de services étendus « EES » de la radio actuelle est associé à une autre radio dans le groupe de haute densité (402), l'autre radio présentant un statut « ne peut pas être éteinte », indiquant que l'autre radio n'est pas réglée pour passer d'un état de marche à un état d'arrêt, lorsque la communication est désactivée, suite à quoi le contrôleur d'accès règle le statut de la radio actuelle sur « peut être éteinte » (403), ou règle autrement le statut de la radio actuelle sur « ne peut pas être éteinte » (404), et le contrôleur d'accès faisant passer au moins l'une des radios dans le groupe de haute densité présentant le statut « peut être éteinte » à l'état d'arrêt lorsque le nombre de radios dans le groupe de haute densité est supérieur au nombre de canaux disponibles (505).

5. Procédé selon la revendication 4, comprenant en outre la sélection, par le contrôleur d'accès, d'une radio parmi les radios dans le groupe de haute densité en tant que radio maître (308), le passage d'au moins l'une des radios dans le groupe de haute densité présentant le statut « peut être éteinte » à l'état d'arrêt au moyen du contrôleur d'accès étant effectué par ordre d'intensité de signal de chaque radio dans le groupe de haute densité présentant le statut « peut être éteinte », de faible à élevée par rapport à la radio maître.

6. Procédé selon la revendication 5, dans lequel l'attribution d'un canal parmi la pluralité de canaux disponibles à chacune des radios dans le groupe de haute densité comprend :
l'attribution d'un canal à chacune des radios par ordre d'intensité de signal de chaque radio, de faible à élevée par rapport à la radio maître (507) ; et
lorsque le nombre de canaux actifs est inférieur au nombre de radios à l'état de marche, une fois que chacun des canaux disponibles a été attribué une fois, pour chaque radio restante qui n'a pas encore été associée à un canal, le contrôleur d'accès attribue un canal parmi la pluralité de canaux disponibles déjà attribués une fois à chaque radio restante par ordre d'interférence de canal, de faible à forte.

7. Procédé selon la revendication 5 ou 6, comprenant en outre le démarrage, par le contrôleur d'accès, d'une temporisation lorsque la radio maître est sélectionnée, et l'exclusion d'une radio du groupe de haute densité lorsqu'il est déterminé que la radio ne parvient pas à détecter la radio maître avant la fin de la temporisation, ou lorsqu'il est déterminé que la radio ne fournit plus de service.

8. Contrôleur d'accès pour la gestion de ressources radio dans un réseau de communication comprenant au moins un point d'accès, le contrôleur d'accès étant configuré pour gérer une pluralité de points d'accès fournissant respectivement une radio pour l'accès au réseau, comprenant :
un module d'ajout (901) destiné à créer un groupe de haute densité et à ajouter une radio actuelle correspondant à un point d'accès parmi la pluralité, et par rapport à la radio actuelle, des radios correspondant à d'autres points d'accès de la pluralité présentant des intensités de signal supérieures à un seuil de réglage de puissance dans le groupe de haute densité, lors de la détermination du fait que la puissance de transmission de la radio actuelle est inférieure ou égale à un seuil de puissance de transmission minimum, et qu'une différence entre un premier paramètre qui est l'intensité de signal, par rapport à la radio actuelle, d'une radio présentant l'intensité de signal la plus faible parmi les radios présentant des intensités de signal supérieures à un seuil de réglage de puissance, et un deuxième paramètre, qui est le seuil de réglage de puissance, est supérieure à l'intervalle prédéterminé de réglage vers le bas ;
un module de changement d'état (902) destiné à faire passer au moins l'une des radios dans le groupe de haute densité d'un état de marche, dans lequel la communication est activée, à un état d'arrêt, dans lequel la communication est désactivée, lorsqu'un nombre de radios dans le groupe de haute densité est supérieur à un nombre d'une pluralité de canaux ;
un module de réglage d'attribution (903) destiné à attribuer un canal parmi la pluralité de canaux disponibles à chacune des radios dans le groupe de haute densité, et à régler une puissance de transmission d'une radio dans le groupe de haute densité sur la plus faible parmi une puissance de configuration prédéterminée et une puissance maximale, si le statut de la radio est modifié une fois qu'un canal a été attribué ; et
un premier module de détermination (904) destiné à déterminer qu'au moins l'une des radios présentant des intensités de signal supérieures au seuil de réglage de puissance par rapport à la radio actuelle appartient à un groupe de haute densité existant respectif, et pour amener le module d'ajout à ajouter la radio actuelle au groupe de haute densité existant respectif d'une radio présentant l'intensité de signal la plus élevée parmi les au moins une radios déterminées.

9. Contrôleur d'accès selon la revendication 8, dans lequel le premier module de détermination (904) est configuré pour détecter, par rapport à la radio actuelle, un nombre prédéterminé de radios voisines présentant une intensité de signal la plus élevée parmi la pluralité de radios qui ne sont actuellement pas comprises dans le groupe de haute densité, et, lors de la détermination du fait qu'une radio présentant l'intensité de signal la plus faible parmi le nombre prédéterminé de radios voisines a une intensité de signal supérieure au seuil de réglage de puissance, et qu'une différence entre l'intensité de signal de la radio déterminée et le seuil de réglage de puissance est supérieure à un intervalle prédéterminé de réglage vers le bas, à amener le module d'ajout à ajouter le nombre prédéterminé de radios voisines au groupe de haute densité.

10. Contrôleur d'accès selon la revendication 9, dans lequel le premier module de détermination (904) est configuré pour déterminer, lors de la détermination de l'intensité de signal de chaque radio voisine du nombre prédéterminé de radios voisines, que l'intensité de signal d'un groupe de haute densité existant est l'intensité de signal d'une radio voisine si la radio voisine appartient au groupe de haute densité existant.

11. Contrôleur d'accès selon la revendication 8, comprenant en outre un module de réglage de statut (905) destiné à traverser chaque radio du groupe de haute densité qui se trouve dans un état de marche lorsque la communication est activée, et à déterminer qu'un ensemble de services étendus « EES » de la radio actuelle est associé à une autre radio dans le groupe de haute densité, l'autre radio présentant un statut « ne peut pas être éteinte », indiquant que l'autre radio n'est pas réglée pour passer d'un état de marche à un état d'arrêt, lorsque la communication est désactivée, suite à quoi le module de réglage de statut est configuré pour régler le statut de la radio actuelle sur « peut être éteinte », ou autrement à régler le statut de la radio actuelle sur « ne peut pas être éteinte », et le module de réglage de statut est configuré pour faire passer au moins l'une des radios dans le groupe de haute densité présentant le statut « peut être éteinte » à l'état d'arrêt lorsque le nombre de radios dans le groupe de haute densité est supérieur au nombre de canaux disponibles.

12. Contrôleur d'accès selon la revendication 11, dans lequel le module de réglage de statut (905) est configuré pour sélectionner une radio parmi les radios dans le groupe de haute densité en tant que radio maître, et le module de changement d'état est configuré pour faire passer au moins l'une des radios dans le groupe de haute densité présentant le statut « peut être éteinte » à l'état d'arrêt, par ordre d'intensité de signal de chaque radio dans le groupe de haute densité présentant le statut « peut être éteinte », de faible à élevée par rapport à la radio maître.

13. Contrôleur d'accès selon la revendication 12, dans lequel le module de réglage d'attribution (903) est configuré pour attribuer un canal parmi la pluralité de canaux disponibles à chacune des radios dans le groupe de haute densité se trouvant en l'état de marche, par ordre d'intensité de signal de chaque radio, de faible à élevée par rapport à la radio maître, et lorsque le nombre de canaux disponibles est inférieur au nombre de radios à l'état de marche, une fois que chacun des canaux disponibles a été attribué une fois, pour chaque radio restante qui n'a pas encore été associée à un canal, le module de réglage d'attribution (903) est configuré pour attribuer un canal parmi la pluralité de canaux disponibles déjà attribués une fois à chaque radio restante par ordre d'interférence de canal, de faible à forte.

14. Contrôleur d'accès selon la revendication 12 ou 13, comprenant en outre un module de temporisation (906) destiné à démarrer une temporisation lorsque la radio maître est sélectionnée, et un deuxième module de détermination (907) destiné à amener une radio à quitter le groupe de haute densité lorsqu'il est déterminé que la radio ne parvient pas à détecter la radio maître avant la fin de la temporisation, ou lorsqu'il est déterminé que la radio ne fournit plus de service.
